# EUROPÄISCHE PATENTANMELDUNG

(11) **EP 3 909 933 A1**
(43) Veröffentlichungstag der Anmeldung: **17.11.2021**
(21) Anmeldenummer: 20174879.5
(22) Anmeldetag: 15.05.2020
(51) Int. Cl.: C04B 28/00, C04B 40/06

(54) **ALKALISILICAT-BASIERTE INITIATOR-KOMPONENTE FÜR DEN EINSATZ IN EINEM ZEMENTÄREN ANORGANISCHEN MEHRKOMPONENTEN-MÖRTELSYSTEM**

(71) Anmelder: Hilti Aktiengesellschaft, 9494 Schaan (LI)
(72) Erfinder: SCHÖNLEIN, Markus, 82205 Gilching (DE); PFEIL, Armin, 86899 Landsberg am Lech (DE); MIDDENDORF, Bernhard, 34379 Calden (DE); SCHADE, Tim, 34125 Kassel (DE)
(74) Vertreter: Hilti Aktiengesellschaft Corporate Intellectual Property

(57) **Zusammenfassung**

Es wird ein zementäres Mehrkomponenten-Mörtelsystem umfassend Hüttensand und eine Alkalisilicat-basierte Initiator-Komponente, zur chemischen Befestigung von Verankerungselementen in mineralischen Untergründen beschrieben, wobei die Alkalisilicat-basierte Initiator-Komponente sich besonders für die chemische Befestigung von verzinkten Verankerungselementen eignet.

## Beschreibung

### Gebiet der Erfindung

Die Erfindung liegt auf dem Gebiet der chemischen Befestigung von Verankerungselementen, insbesondere verzinkte Verankerungselemente, in mineralischen Untergründen im Bereich der Bauindustrie und Befestigungstechnik, und betrifft insbesondere die chemische Befestigung von Verankerungselementen mittels eines Alkalisilicat-aktivierbaren zementären anorganischen Mehrkomponenten-Mörtelsystems umfassend Hüttensand.

### Stand der Technik

Verbundmörtel zum Befestigen von Verankerungselementen in mineralischen Untergründen im Bereich der Bauindustrie und Befestigungstechnik sind bekannt. Diese Verbundmörtel basieren fast ausschließlich auf organischen epoxid-haltigen Harz/Härtersystemen. Es ist jedoch allgemein bekannt, dass solche Systeme umweltschädlich, teuer, potenziell gefährlich und/oder giftig für die Umwelt und die Person sind, die sie handhabt, und sie müssen häufig speziell gekennzeichnet werden. Darüber hinaus weisen organische Systeme häufig eine stark verringerte Stabilität auf, wenn sie starkem Sonnenlicht oder auf andere Weise erhöhten Temperaturen ausgesetzt werden, wodurch ihre mechanische Leistung bei der chemischen Befestigung von Verankerungselementen verringert wird. Darüberhinaus können Probleme bei der chemischen Befestigung von verzinkten Verankerungselementen auftreten, die auf eine Zinkkorrosion oder auch Kontaktkorrosion durch die chemischen Befestigungsmittel zurückzuführen ist. Dauerhaft können diese Verankerungselemente über die chemische Befestigung keine ausreichend hohen Lasten aufweisen.

Es besteht daher ein Bedarf an einem gebrauchsfertigen zementären Mehrkomponenten-Mörtelsystem, vorzugsweise einem zementären Zweikomponenten-Mörtelsystem, das den Systemen des Standes der Technik in Bezug auf Umweltaspekte, Gesundheit und Sicherheit, Handhabung, Lagerzeit und einem guten Gleichgewicht zwischen Abbinden und Aushärten überlegen ist. Insbesondere ist es von Interesse ein System bereitzustellen, das so schonend aktivierbar ist, und bei dessen Einsatz eine Oberflächenbeschädigung von verzinkten Verankerungselementen auszuschließen ist.

Darüber hinaus ist es von Interesse, eine Initiator-Komponente für ein zementäres anorganisches Mehrkomponenten-Mörtelsystem umfassend Hüttensand bereitzustellen, wobei das Mörtelsystem zur chemischen Befestigung von insbesondere verzinkten Verankerungselementen in mineralischen Untergründen verwendet werden kann, ohne die Handhabung, Eigenschaften und die mechanische Leistung des chemischen Befestigungssystems nachteilig zu beeinflussen.

In Anbetracht des Vorstehenden ist es weiter eine Aufgabe der vorliegenden Erfindung, ein zementäres System, insbesondere ein zementäres Mehrkomponenten-Mörtelsystem, im speziellen ein zementäres Zweikomponenten-Mörtelsystem, bereitzustellen, das die Nachteile der Systeme des Standes der Technik überwindet. Insbesondere ist es eine Aufgabe ein gebrauchsfertiges zementäres Mehrkomponenten-Mörtelsystem bereitzustellen, das einfach zu handhaben und umweltfreundlich ist, das vor Gebrauch über einen bestimmten Zeitraum stabil gelagert werden kann und ein gutes Gleichgewicht zwischen Abbinden und Aushärten aufweist, und auch unter dem Einfluss erhöhter Temperaturen eine hervorragende mechanische Leistung bei der chemischen Befestigung von insbesondere verzinkten Verankerungselementen in mineralischen Untergründen aufweist.

Darüber hinaus ist es eine Aufgabe der vorliegenden Erfindung, ein zementäres Mehrkomponenten-Mörtelsystem bereitzustellen, das zur chemischen Befestigung von Verankerungsmitteln, vorzugsweise von verzinkten Metallelementen, in mineralischen Untergründen, wie Bauwerken aus Mauerwerk, Naturstein, Beton, Durchlässigkeitsbeton oder dergleichen verwendet werden kann.

Diese und weitere Aufgaben, die aus der folgenden Beschreibung der Erfindung ersichtlich sind, werden durch die vorliegende Erfindung, wie sie in den unabhängigen Ansprüchen beschrieben ist, gelöst. Die abhängigen Ansprüche beziehen sich auf bevorzugte Ausführungsformen.

### ZUSAMMENFASSUNG DER ERFINDUNG

Die vorliegende Erfindung betrifft ein zementäres Mehrkomponenten-Mörtelsystem umfassend Hüttensand und eine Alkalisilicat-basierte Initiator-Komponente, das für den Einsatz als anorganisches chemisches Befestigungssystem für Verankerungselemente in mineralischen Untergründen bestens geeignet ist, um hohe Lastwerte zu erreichen. Insbesondere betrifft die vorliegende Erfindung ein zementäres Mehrkomponenten-Mörtelsystem umfassend Hüttensand und eine Alkalisilicat-basierte Initiator-Komponente, zur chemischen Befestigung von verzinkten Verankerungselementen in mineralischen Untergründen, wobei die Alkalisilicat-basierte Initiator-Komponente einen pH-Wert in einem Bereich von 12,5 bis 13,5 aufweist.

Weiterhin betrifft die vorliegende Erfindung eine Alkalisilicat-basierte Initiator-Komponente für ein zementäres anorganisches Mehrkomponenten-Mörtelsystem umfassend Hüttensand, zur chemischen Befestigung von Verankerungselementen, insbesondere verzinkten Verankerungselemente, in mineralischen Untergründen.

Weiterhin betrifft die vorliegende Erfindung die Verwendung eines solchen zementären Mehrkomponenten-Mörtelsystems und einer solchen Alkalisilicat-basierten Initiator-Komponente zur chemischen Befestigung von Verankerungsmitteln, vorzugsweise von Metallelementen, in mineralischen Untergründen, wie Bauwerken aus Mauerwerk, Naturstein, Beton, Durchlässigkeitsbeton oder dergleichen.

Andere Aufgaben und Merkmale dieser Erfindung sind zum Teil offensichtlich und werden zum Teil im Folgenden erläutert. Insbesondere wird der Gegenstand der vorliegenden Erfindung im Detail durch die Ausführungsbeispiele beschrieben.

### AUSFÜHRLICHE BESCHREIBUNG DER ERFINDUNG

Die folgenden Begriffe werden im Rahmen der vorliegenden Erfindung verwendet: Der Begriff "Bindemittel" oder auch "Bindemittel-Komponente" bezieht sich im Rahmen der vorliegenden Erfindung auf den zementären Bestandteil sowie optionaler Komponenten wie beispielsweise Füllstoffe, des Mehrkomponenten-Mörtelsystems. Insbesondere wird dieser auch als A-Komponente bezeichnet.

Der Begriff "Initiator" oder auch "Initiator-Komponente" bezieht sich im Rahmen der vorliegenden Erfindung auf den wässrigen Alkalisilicat-basierten Bestandteil, der ein Ansteifen, Erstarren und Erhärten als Folgereaktion auslöst. Insbesondere wird dieser auch als B-Komponente bezeichnet.

Die Begriffe "aufweisen", "mit" und "haben" sollen einschließend sein und bedeuten, dass auch andere als die genannten Elemente gemeint sein können.

Im Rahmen der vorliegenden Erfindung verwendet, schließen die Singularformen "ein", "eine" und "einer" auch die entsprechenden Pluralformen ein, sofern der Zusammenhang nicht eindeutig auf etwas anderes schließen lässt. Somit soll zum Beispiel der Begriff "ein" "ein oder mehrere" oder "zumindest ein" bedeuten, sofern nicht anders angegeben.

Verschiedene Zementarten, deren Zusammensetzung und deren Anwendungsbereiche sind aus dem Stand der Technik bekannt, jedoch ist deren Einsatz als anorganisches chemisches Befestigungssystem weithingehend noch unbekannt. Insbesondere der Einsatz eines zementären Mehrkomponenten-Mörtelsystems auf Basis von Hüttensand.

Es ist nun einerseits herausgefunden worden, dass ein zementäres Mehrkomponenten-Mörtelsystem umfassend Hüttensand und eine Alkalisilicat-basierte Initiator-Komponente, bestens zur chemischen Befestigung von verzinkten Verankerungselementen in mineralischen Untergründen geeignet ist, wobei die Alkalisilicat-basierte Initiator-Komponente einen pH-Wert in einem Bereich von 12,5 bis 13,5 aufweist.

Andererseits ist herausgefunden worden, dass eine Alkalisilicat-basierte Initiator-Komponente sich besonders für ein zementäres anorganisches Mehrkomponenten-Mörtelsystem umfassend Hüttensand, zur chemischen Befestigung von Verankerungselementen in mineralischen Untergründen eignet, insbesondere von verzinkten Verankerungselementen.

Darüber hinaus zeichnen sich die Systeme, insbesondere das zementäre Mehrkomponenten-Mörtelsystem, durch positive Vorteile in Bezug auf Umweltaspekte, Gesundheit und Sicherheit, Handhabung, Lagerzeit und einem guten Gleichgewicht zwischen Abbinden und Aushärten aus, ohne die Handhabung, Eigenschaften und die mechanische Leistung des chemischen Befestigungssystems nachteilig zu beeinflussen.

Daher betrifft die vorliegende Erfindung ein zementäres Mehrkomponenten-Mörtelsystem umfassend Hüttensand und eine Alkalisilicat-basierte Initiator-Komponente, zur chemischen Befestigung von verzinkten Verankerungselementen in mineralischen Untergründen, wobei die Alkalisilicat-basierte Initiator-Komponente einen pH-Wert in einem Bereich von 12,5 bis 13,5 aufweist.

Es ist bevorzugt, dass der Hüttensand in der Bindemittel-Komponente vorliegt. Besonders bevorzugt ist, dass das zementäre Mehrkomponenten-Mörtelsystem ein Zweikomponenten-Mörtelsystem ist und eine pulverförmige zementäre Bindemittel-Komponente und eine wässrige Alkalisilicat-basierte Initiator-Komponente umfasst.

Der Hüttensand, der Hauptbestandteil von sogenannten Portlandhütten- und Hochofenzementen ist, des zementären Mehrkomponenten-Mörtelsystems umfasst von 30 bis 45 % Calciumoxid (CaO), von 30 bis 45 % Siliciumdioxid (SiO₂), von 1 bis 15 % Aluminiumoxid (Al₂O₃) und von 4 bis 17 % Magnesiumoxid (MgO), und 0,5 bis 1 % Schwefel (S). Weitere Kennwerte des Hüttensandes sind Eisenoxid (Fe₂O₃), Natriumoxid (Na₂O), Kaliumoxid (K₂O), Chlorid, Schwefeltrioxid (SO₃) und Manganoxid (Mn₂O₃), die vorzugweise weniger als 5 % des Hüttensandes ausmachen.

Das zementäre Mehrkomponenten-Mörtelsystem der vorliegenden Erfindung kann auch aufgemahlenen Hüttensand mit einer Mahlfeinheit im Bereich von 4000 bis 12000 cm²/g umfassen.

Das zementäre Mehrkomponenten-Mörtelsystem der vorliegenden Erfindung umfasst vorzugsweise Hüttensand in einem Bereich von 1 Gew.-% bis 60 Gew.-%, mehr bevorzugt von 10 Gew.-% bis 50 Gew.-%, am meisten bevorzugt in einem Bereich von 25 Gew.-% bis 45 Gew.-%, bezogen auf das Gesamtgewicht der Bindemittel-Komponente.

Vorzugsweise umfasst das zementäre Mehrkomponenten-Mörtelsystem ferner Silikastaub. Bevorzugt liegt der Silikastaub in der Bindemittel-Komponente vor.

Der Silikastaub des zementären Mehrkomponenten-Mörtelsystem liegt in einem Bereich von 1 Gew.-% bis 10 Gew.-%, vorzugsweise von 2 Gew.-% bis 8 Gew.-%, am meisten bevorzugt in einem Bereich von 4 Gew.-% bis 7.5 Gew.-%, bezogen auf das Gesamtgewicht der Bindemittel-Komponente, vor. Vorzugsweise hat der Silikastaub eine durchschnittliche Partikelgröße von 0,4 µm und eine Oberfläche von 180.000 bis 220.000 cm²/g bzw. 18-22 m²/g.

Alternativ kann der Silikastaub auch durch Puzzolane-Materialien bzw. durch Materialien mit Puzzolanen-Eigenschaften oder durch andere feine inerte Füllstoffe ersetzt werden. Dies sind zum Beispiel Flugasche, Kalksteinmehl, Korund, Calcit, Dolomit, Ziegelmehl, Reisschalenasche, Phonolith, calcinierter Ton und Metakaolin.

In einer bevorzugten Ausführungsform des zementären Mehrkomponenten-Mörtelsystem liegt der Silikastaub in einem Bereich von 5 Gew.-% bis 8 Gew.-%, bezogen auf das Gesamtgewicht der Bindemittel-Komponente, vor.

Des Weiteren kann mindestens ein Füllstoff oder Füllstoff-Mischungen in der Bindemittel-Komponente vorhanden sein. Diese sind vorzugsweise ausgewählt aus der Gruppe bestehend aus Quarz, Sand, Quarzmehl, Ton, Flugasche, Hüttensand, Pigmente, Titanoxide, leichte Füllstoffe, Kalksteinfüllstoffen, Korund, Dolomit, alkalibeständigem Glas, zerkleinerten Steinen, Kiesen, Kieseln und Mischungen davon.

Der mindestens eine Füllstoff des zementären Mehrkomponenten-Mörtelsystems liegt vorzugsweise in einem Bereich von 20 Gew.-% bis 80 Gew.-%, bevorzugter von 30 Gew.-% bis 70 Gew.-%, am meisten bevorzugt in einem Bereich von 40 Gew.-% bis 60 Gew.-%, bezogen auf das Gesamtgewicht der Bindemittel-Komponente vor.

In einer bevorzugten Ausführungsform des zementären Mehrkomponenten-Mörtelsystem ist der Füllstoff Sand und liegt in einem Bereich von 45 bis 55 Gew.-%, bezogen auf das Gesamtgewicht der Bindemittel-Komponente, vor.

In einer besonders bevorzugten Ausführungsform der vorliegenden Erfindung ist der Füllstoff eine Mischung aus Sand und Quarzmehl. Vorzugsweise liegt der Sand in einem Bereich von 45 Gew.-% bis 55 Gew.-% und das Quarzmehl in einem Bereich von 5 Gew.-% bis 10 Gew.-% bezogen, auf das Gesamtgewicht der Bindemittel-Komponente, vor.

Des Weiteren kann die Bindemittel-Komponente weitere Zemente enthalten, wie beispielsweise calciumaluminat-basierter Zement. Des Weiteren kann die Bindemittel-Komponente Fasern enthalten, wie beispielsweise Mineralfasern, Chemiefasern, Naturfasern, Kunstfasern, Fasern aus natürlichen oder synthetischen Polymeren, Fasern aus anorganischen Stoffen, insbesondere Carbonfasern oder Glasfasern.

Die Alkalisilicat-basierte Initiator-Komponente des Mehrkomponenten-Mörtelsystems umfasst vorzugsweise ein Alkalimetallsilicat-basierten Bestandteil, wobei das Alkalimetallsilicat ausgewählt ist aus der Gruppe bestehend aus Natriumsilicat, Kaliumsilicat, Lithiumsilicat, Modifikationen davon, Mischungen davon und wässrigen Lösungen davon. In einer bevorzugten Ausführungsform ist die Alkalisilicat-basierte Initiator-Komponente eine wässrige Lösung von Kaliumsilikat und Kaliumhydroxid. In einer besonders bevorzugten Ausführungsform ist die Initiator-Komponente eine wässrige Lösung von 10 mol/l KOH und 1,72 mol/l Kaliumsilicat (Betol® K 35 T, woellner, Deutschland).

In einer bevorzugten Ausführungsform der vorliegenden Erfindung umfasst die Alkalisilicat-basierte Initiator-komponente 1 bis 50 Gew.-% Silikat, vorzugsweise 10 bis 40 Gew.-%, besonders bevorzugt 15 bis 30 Gew.-%, bezogen auf das Gesamtgewicht des wässrigen Alkalisilikats.

Die Alkalisilicat-basierte Initiator-Komponente umfasst mindestens etwa 0,01 Gew.-%, vorzugsweise mindestens 0,02 Gew.-%, besonders bevorzugt mindestens etwa 0,05 Gew.-%, besonders bevorzugt mindestens 1 Gew.-%, von etwa 0,01 Gew.-% bis etwa 40 Gew.-%, vorzugsweise von etwa 0,02 Gew.-% bis etwa 35 Gew.-%, mehr vorzugsweise von etwa 0,05 Gew.-% bis ca. 30 Gew.-%, besonders bevorzugt von etwa 1 Gew.-% bis ca. 25 Gew.-% des Alkalisilicat-basierten Bestandteils, bezogen auf das Gesamtgewicht von Initiator-Komponente.

Es hat sich nun herausgestellt, dass die erfindungsgemäß eingesetzte Alkalisilicat-basierte Initiator-Komponente sich hervorragend für die chemischen Befestigung von Verankerungselementen, insbesondere verzinkten Verankerungselemente, in mineralischen Untergründen eignet, wenn sie in einem zementären anorganischen Mehrkomponenten-Mörtelsystem umfassend Hüttensand eingesetzt wird und einen pH-Wert in einem Bereich von 12,5-13,5 aufweist.

Insbesondere wird eine Alkalisilicat-basierte Initiator-Komponente mit einen pH-Wert in einem Bereich von 12,5-13 in einem zementären Mehrkomponenten-Mörtelsystem umfassend Hüttensand verwendet, um geeignete Lastwerte von verzinkten Ankerstangen im Vergleich zu herkömmlichen Ankerstangen zu erreichen. Die Alkalisilicat-basierte Initiator-Komponente mit einen pH-Wert in einem Bereich von 12,5-13 verhindert eine Oberflächenbeschädigung und kann demnach für die Befestigung von verzinkten Ankerstangen eingesetzt werden.

Die Alkalisilicat-basierte Initiator-Komponente des Mehrkomponenten-Mörtelsystems umfasst optional ein Fließmittel. Das optionale Fließmittel liegt in einem Bereich von 1 Gew.-% bis 30 Gew.-%, vorzugsweise von 5 Gew.-% bis 25 Gew.-%, am meisten bevorzugt in einem Bereich von 10 Gew.-% bis 20 Gew.-%, bezogen auf das Gesamtgewicht der Initiator-Komponente, vor. Das optionale Fließmittel ist ausgewählt aus der Gruppe bestehend aus Polyacrylsäurepolymeren mit niedrigem Molekulargewicht (LMW), Superweichmachern aus der Familie von Polyphosphonatpolyox und Polycarbonatpolyox, Polykondensaten, z.B. Naphthalin-Sulfonsäure-Formaldehyd-Polykondensat oder Melamin-Sulfonsäure-Formaldehyd-Polykondensat, Lignosulfonaten und Ethacryl-Superweichmachern aus der Polycarboxylatether-Gruppe, und Mischungen davon, zum Beispiel Ethacryl® G (Coatex, Arkema Group, Frankreich), Acumer® 1051 (Rohm und Haas, UK) oder Sika® VisoCrete®-20 HE (Sika, Deutschland). Geeignete Fließmittel sind im Handel erhältliche Produkte.

In einer ganz besonderen Ausführungsform des zementären Mehrkomponenten-Mörtelsystems beträgt der Wasseranteil 90 Gew.-% bis 95 Gew.-% und der Fließmittelanteil 5 Gew.-% bis 10 Gew.-%, bezogen auf das Gesamtgewicht der Initiator-Komponente.

Des Weiteren kann mindestens ein Füllstoff oder Füllstoff-Mischungen in der Initiator-Komponente vorhanden sein. Diese sind vorzugsweise ausgewählt aus der Gruppe bestehend aus Quarz, Sand, Quarzmehl, Ton, Flugasche, Pigmente, Titanoxide, leichte Füllstoffe, Kalksteinfüllstoffen, Korund, Dolomit, alkalibeständigem Glas, zerkleinerten Steinen, Kiesen, Kieseln und Mischungen davon.

Die Alkalisilicat-basierte Initiator-Komponente kann zusätzlich ein Verdickungsmittel umfassen. Das Verdickungsmittel, kann ausgewählt sein aus der Gruppe bestehend aus Bentonit, Kieselsäure, Verdickungsmitteln auf der Basis von Acrylat, wie alkalilöslichen oder alkaliquellbaren Emulsionen, Quarzstaub, Ton und Titanat-Chelierungsmitteln. Angeführte Beispiele sind Polyvinylalkohol (PVA), hydrophob modifizierte alkalilösliche Emulsionen (HASE), hydrophob modifizierte Ethylenoxi-durethan-Polymere, die im Stand der Technik als HEUR bekannt sind, und Cellulose-Verdickungsmittel, wie Hydroxymethylcellulose (HMC), Hydroxyethylcellulose (HEC), hydrophob modifizierte Hydroxyethylcellulose (HMHEC), Natriumcarboxymethylcellulose (SCMC), Natriumcarboxymethyl-2-hydroxyethylcellulose, 2-Hydroxypropylmethylcellulose, 2-Hydroxyethylmethylcellulose, 2-Hydroxybutylmethylcellulose, 2-Hydroxy-ethylethylcellulose, 2-Hydroxypropylcellulose, Attapulgitton und Mischungen davon. Geeignete Verdickungsmittel sind im Handel erhältliche Produkte, wie Optigel WX (BYK-Chemie GmbH, Deutschland), Rheolate 1 (Elementis GmbH, Deutschland) und Acrysol ASE-60 (The Dow Chemical Company).

Die Anwesenheit oben-genannter Bestandteile verändert die gesamte anorganische Beschaffenheit des zementären Mehrkomponenten-Mörtelsystems nicht.

Die A-Komponente oder Bindemittel-Komponente, die den Hüttensand umfasst, liegt in fester Form vor, vorzugsweise in der Form eines Pulvers oder Staubes. Die B-Komponente oder Initiator-Komponente liegt in wässriger Form vor, gegebenenfalls in der Form einer Aufschlämmung oder Paste.

Das Gewichtsverhältnis zwischen der A-Komponente und der B-Komponente (A/B) liegt vorzugsweise zwischen 10/1 und 1/3, und beträgt vorzugsweise 8/1 - 4/1. Vorzugsweise umfasst das zementäre Mehrkomponenten-Mörtelsystem bis zu 80 Gew. % der A-Komponente und bis zu 40 Gew. % der B-Komponente.

Nach der getrennten Herstellung werden die A-Komponente und die B-Komponente in getrennte Behälter eingebracht, aus denen sie durch mechanisches Einwirken gemischt werden können. Insbesondere ist das zementäre Mehrkomponenten-Mörtelsystem ein Zweikomponenten-Mörtelsystem, vorzugsweise ein zementäres Zweikomponenten-Kapsel-System. Das System umfasst vorzugsweise zwei oder mehr Folienbeutel zum Trennen der härtbaren Bindemittel-Komponente und der Initiator-Komponente. Die Inhalte der Kammern, Glaskapseln oder Beutel, wie Folienbeutel, die unter mechanischer Einwirkung, vorzugsweise durch Einbringen eines Verankerungselementes, miteinander gemischt werden, liegen vorzugsweise schon in einem Bohrloch vor. Die Anordnung in Mehrkammer-Kartuschen oder Eimern oder Sätzen von Kübeln ist auch möglich.

Das zementäre Mehrkomponenten-Mörtelsystem der vorliegenden Erfindung kann für eine chemische Befestigung von Verankerungselementen, vorzugsweise verzinkten Metallelementen, wie Ankerstäben, insbesondere Gewindestäben, Bolzen, Stahlverstärkungsstangen oder dgl., in mineralischen Flächen, wie Strukturen aus Mauerwerk, Beton, durchlässigem Beton oder Naturstein, verwendet werden. Insbesondere kann das zementäre Mehrkomponenten-Mörtelsystem der vorliegenden Erfindung für eine chemische Befestigung von verzinkten Verankerungselementen, wie Metallelementen, in Bohrlöchern verwendet werden.

Außerdem kann das zementäre Mehrkomponenten-Mörtelsystem der vorliegenden Erfindung für die Anbringung von Fasern, Gelegen, Gewirken oder Verbundstoffen, insbesondere von Fasern mit hohem Modul, vorzugsweise von Kohlefasern, insbesondere zur Verstärkung von Gebäudestrukturen, zum Beispiel Wänden oder Decken oder Böden, und ferner für Montagekomponenten, wie Platten oder Blöcke, z.B. aus Stein, Glas oder Kunststoff, an Gebäuden oder Strukturelementen verwendet werden.

Die folgenden Beispiele veranschaulichen die Erfindung, ohne sie dadurch einzuschränken.

### BEISPIELE

### 1. Zusammensetzung des Hüttensandes

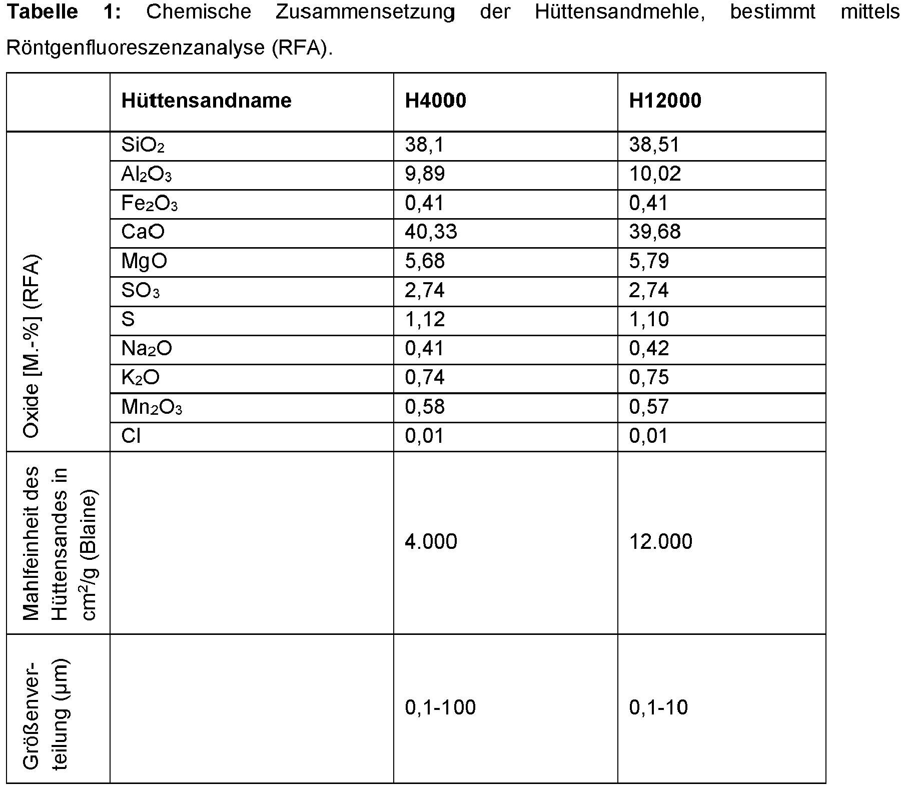

### 2. Herstellung von A-Komponente und B-Komponente

Die Herstellung der pulverförmigen Bindemittel-Komponenten (A-Komponente) sowie der flüssigen Initiator-Komponenten (B-Komponente) der Vergleichsbeispiele 1-4 und 7-10 und der erfindungsgemäßen Beispiele 5-6 und 11-13 erfolgt zunächst durch Vermischen der in den Tabellen 2 bzw. 3 angegebenen Bestandteile mit den in Tabelle 4 angegebenen Anteilen, die angegeben sind in Gew .-% ausgedrückt.

**Tabelle 2: Zusammensetzung der A-Komponente basierend auf Hüttensand (Gew.-%).**

| | Bindemittel | Bindemittel | Bindemittel | Füllstoff | Füllstoff |
|---|---|---|---|---|---|
| | **H4000** | **H12000** | **Silikastaub¹⁾** | **Sand²⁾** | **Quarzmehl³⁾** |
| **A0** | 34,5 | | 7,5 | 50 | 8 |
| **A1** | | 34,5 | 7,5 | 50 | 8 |

| | | | | | |
|---|---|---|---|---|---|
| ¹⁾ Silikastaub: Mahlfeinheit in cm²/g (Blaine) 18.000-22.000; Größenverteilung (µm) 0,1-1. ²⁾ Sand: Größenverteilung (µm) 125-1000. ³⁾ Quarzmehl: Größenverteilung (µm) 0,1-100. | | | | | |

**Tabelle 3: Zusammensetzung der B-Komponente (Gew.-%).**

| | Initiator | Initiator | |
|---|---|---|---|
| | **KOH 10 mol/l** | **K₂SiO₃ 1,72 mol/l** | **pH-Wert der Alkalisilicat-Lösung** |
| **B0** | 50 | 50 | Über 13,5 |
| **B1** | 40 | 60 | Über 13,5 |
| **B2** | 33 | 67 | Über 13,5 |
| **B3** | 30 | 70 | 13,5 |
| **B4** | 25 | 75 | 13 |
| **B5** | 20 | 80 | 12,5 |

**Table 4: Mischverhältnis von A-Komponente zu B-Komponente.**

| **A-Komponente** | **B-Komponente** | **B/A-Verhältnis** | **Wasser/Bindemittel-Verhältnis** |
|---|---|---|---|
| A0 | B0 | 0,198 | 0,3 |
| A0 | B1 | 0,198 | 0,3 |
| A0 | B2 | 0,198 | 0,3 |
| A0 | B3 | 0,198 | 0,3 |
| A0 | B4 | 0,198 | 0,3 |
| A0 | B5 | 0,198 | 0,3 |
| A1 | B0 | 0,150 | 0,225 |
| A1 | B1 | 0,150 | 0,225 |
| A1 | B2 | 0,150 | 0,225 |

### 3. Bestimmung der mechanischen Leistung

Nach der getrennten Herstellung werden die pulverförmige Bindemittel-Komponente A und die Initiator-Komponente B mit einem Mischer gemischt. Alle Proben werden 1 Minute lang gemischt. Die Mischungen werden in eine Edelstahlhülsenbohrloch mit einem Durchmesser von 12 mm, einer Verankerungstiefe von 32 mm und geschliffenen Hinterschnitten von 0,33 mm eingegossen. Unmittelbar nach dem Befüllen wird eine M8-Gewindestange mit einer Länge von 100 mm in das Bohrloch eingeführt.

Die Lastwerte der ausgehärteten Mörtelzusammensetzungen werden zu bestimmten Zeiten innerhalb von 24 Stunden mit einem Gerät zur Materialprüfung "Zwick Roell Z050" (Zwick GmbH & Co. KG, Ulm, Deutschland) bestimmt. Die Edelstahlhülse ist auf einer Platte befestigt, während die Gewindestange mit einer Mutter am Kraftmessgerät befestigt ist. Bei einer Vorlast von 500 N und einer Prüfgeschwindigkeit von 3 mm/min wird die Bruchlast durch mittiges Herausziehen der Gewindestange ermittelt. Jede Probe besteht aus einem Mittelwert von fünf Auszügen. Die Bruchlast wird als innere Festigkeit berechnet und in Tabelle 5 in N/mm² angegeben.

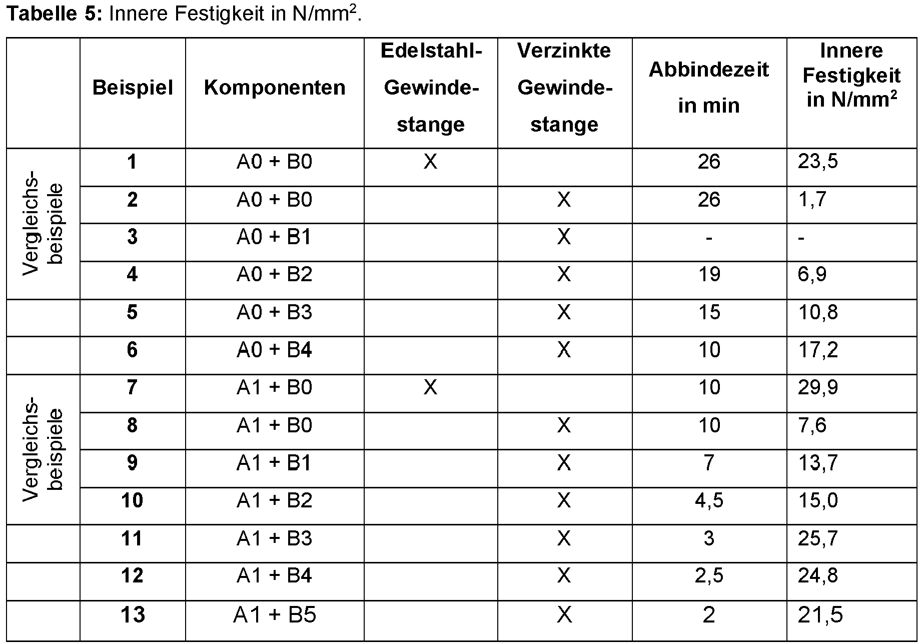

Wie aus Tabelle 5 ersichtlich ist, zeigen alle messbaren erfindungsgemäßen Systeme nach 24 Stunden Aushärtung erhebliche innere Festigkeiten sowie erhöhte Lastwerte und damit verbesserte mechanische Festigkeiten im Vergleich zu den Vergleichssystemen, wobei die Alkalisilicat-basierte B-Komponente einen pH-Wert von über 13,5 aufweist, und sich hervorragend für die chemische Befestigung von verzinkten Verankerungselementen eignen.

## Patentansprüche

1. Zementäres Mehrkomponenten-Mörtelsystem umfassend Hüttensand und eine alkalisilicat-basierte Initiator-Komponente, zur chemischen Befestigung von verzinkten Verankerungselementen in mineralischen Untergründen, wobei die alkalisilicat-basierte Initiator-Komponente einen pH-Wert in einem Bereich von 12,5 bis 13,5 aufweist.

2. Zementäres Mehrkomponenten-Mörtelsystem nach Anspruch 1, ferner umfassend Silikastaub.

3. Zementäres Mehrkomponenten-Mörtelsystem nach Anspruch 1 oder 2, ferner umfassend mindestens einen mineralischen Füllstoff ausgewählt aus der Gruppe bestehend aus Quarz, Sand, Quarzmehl, Ton, Flugasche, Hüttensand, Pigmente, Titanoxide, leichte Füllstoffe, Kalksteinfüllstoffen, Korund, Dolomit, alkalibeständigem Glas, zerkleinerten Steinen, Kiesen, Kieseln und Mischungen davon.

4. Zementäres Mehrkomponenten-Mörtelsystem nach einem der vorhergehenden Ansprüche, wobei das zementäre Mehrkomponenten-Mörtelsystem ein Zweikomponenten-Mörtelsystem ist, vorzugsweise ein Zweikomponenten-Kapsel-Mörtelsystem.

5. Zementäres Mehrkomponenten-Mörtelsystem nach Anspruch 4, wobei das Zweikomponenten-Kapsel-Mörtelsystem eine pulverförmige A-Komponente, umfassend den Hüttensand, vorzugweise mit einer Mahlfeinheit im Bereich von 4000 bis 12000 cm²/g, und den Silikastaub, und eine wässrige B-Komponente, umfasst.

6. Zementäres Mehrkomponenten-Mörtelsystem nach einem der vorhergehenden Ansprüche, wobei die Alkalisilicat-basierte Initiator-Komponente einen Alkalimetallsilicat-basierten Bestandteil umfasst, wobei das Alkalimetallsilicat ausgewählt ist aus der Gruppe bestehend aus Natriumsilicat, Kaliumsilicat, Lithiumsilicat, Modifikationen davon, Mischungen davon und wässrigen Lösungen davon.

7. Zementäres Mehrkomponenten-Mörtelsystem nach einem der vorhergehenden Ansprüche, wobei die Alkalisilicat-basierte Initiator-Komponente eine wässrige Lösung aus Kaliumhydroxid und Kaliumsilicat ist.

8. Zementäres Mehrkomponenten-Mörtelsystem nach einem der vorhergehenden Ansprüche, wobei der Hüttensand in einem Bereich von 1 Gew.-% bis 50 Gew.-%, bezogen auf das Gesamtgewicht der Bindemittel-Komponente, vorliegt.

9. Zementäres Mehrkomponenten-Mörtelsystem nach einem der vorhergehenden Ansprüche, wobei der Silikastaub in einem Bereich von 1 Gew.-% bis 10 Gew.-%, bezogen auf das Gesamtgewicht der Bindemittel-Komponente, vorliegt.

10. Alkalisilicat-basierte Initiator-Komponente für ein zementäres anorganisches Mehrkomponenten-Mörtelsystem umfassend Hüttensand, zur chemischen Befestigung von Verankerungselementen, insbesondere verzinkten Verankerungselemente, in mineralischen Untergründen.

11. Alkalisilicat-basierte Initiator-Komponente nach Anspruch 10, wobei die Alkalisilicat-basierte Initiator-Komponente einen pH-Wert in einem Bereich von 12,5 bis 13,5 aufweist.

12. Alkalisilicat-basierte Initiator-Komponente nach Anspruch 10 oder 11, wobei die Alkalisilicat-basierte Initiator-Komponente einen Alkalimetallsilicat-basierten Bestandteil umfasst, wobei das Alkalimetallsilicat ausgewählt ist aus der Gruppe bestehend aus Natriumsilicat, Kaliumsilicat, Lithiumsilicat, Modifikationen davon, Mischungen davon und wässrigen Lösungen davon.

13. Verwendung einer Alkalisilicat-basierte Initiator-Komponente nach einem der Ansprüche 10 bis 12 in einem zementären Mehrkomponenten-Mörtelsystem umfassend Hüttensand als anorganisches chemisches Befestigungssystem für verzinkte Verankerungselemente in mineralischen Untergründen, zur Erhöhung der Lastwerte.

14. Verwendung nach Anspruch 13, wobei das zementäre Mehrkomponenten-Mörtelsystem ferner Silikastaub umfasst.

15. Verwendung eines zementären Mehrkomponenten-Mörtelsystem nach einem der Ansprüche 1 bis 9 für die chemische Befestigung von verzinkten Verankerungselementen in mineralischen Untergründen.
